# EUROPÄISCHE PATENTSCHRIFT

(11) **EP 0 962 263 B1**
(45) Veröffentlichungstag und Bekanntmachung des Hinweises auf die Patenterteilung: **01.12.2004**
(21) Anmeldenummer: 99110357.3
(22) Anmeldetag: 28.05.1999
(51) Int. Cl.: B08B 3/02

(54) **Verfahren und Anlage zur Entfernung von gefährdenden Beschichtungen**
Method and installation for removing hazardous coatings
Procédé et installation pour enlever des revêtements dangereux

(30) Priorität: 06.06.1998 DE 19825421; 10.05.1999 DE 19921342
(43) Veröffentlichungstag der Anmeldung: 08.12.1999
(73) Patentinhaber: Mieden, Johannes-Albert, 45259 Essen (DE)
(72) Erfinder: Mieden, Johannes-Albert, 45259 Essen (DE)
(74) Vertreter: Schulte, Jörg, Dipl.-Ing.

(56) Entgegenhaltungen:
- WO-A-92/10314
- US-A- 4 897 121
- US-A- 5 016 314

## Beschreibung

Die Erfindung betrifft ein Verfahren zur Entfernung von stark gesundheitsund/oder umweltgefährdenden Asbestfasern enthaltenden Beschichtungen, Steinkohlenteerpech-, polycyclische Kohlenwasserstoffe oder polychlorierte Biphenyl-Beschichtungen von Wasserbauwerken bei dem der zu bearbeitende Sektor eines Wasserbauwerkes/Wehres freigelegt und dann unter Belassung einer Schleuse für die Arbeiter eingehaust wird, woraufhin der Sektor von der gefährdenden Beschichtung mit Hilfe von Hochdruckwasserstrahlen befreit wird, dass auschließend die Oberfläche des Sektors getrocknet und sandgestrahlt wird, dass die Beschichtung bei gleichzeitiger Zerkleinerung abgehoben und gesammelt und dass der beim Aufbringen der Hochdruckwasserstrahlen entstehende Wasserdampf abgesaugt und niedergeschlagen und dann entsorgt wird. Die Erfindung betrifft außerdem eine Anlage zur Entfernung von Asbestfasern enthaltenden und selbst stark gesundheits- und umweltgefährdenden Beschichtungen von Wasserbauwerken, bestehend aus einer den zu bearbeitenden Sektor eines Wehres freilegenden Außenanlage einer die Beschichtung von der Oberfläche des Wehres ablösenden Strahleinrichtung in Form einer einen Hochdmckwasserstrahl erzeugenden Strahlpistole sowie einer Aufbereitung für das Strahlmittel und damit zur Durchführung des Verfahrens.

Zu Zeiten, als die Gefährdung durch Asbestfasern durch Steinkohlenteerpech und auch durch polycyclische aromatische Kohlenwasserstoffe oder polychlorierte Biphenyle Beschichtungen noch nicht erkannt worden war, sind vor allem für im Wasser liegende Teile im Wehr- und im Schleusenbereich aber auch die zu schützenden Teile in anderen Bereichen mit einer möglichst dicken Beschichtung aus Steinkohlenteerpech versehen worden. Um diese Beschichtung möglichst dick und über lange Zeit haltbar zu machen, ist diese Steinkohlenteerpechbeschichtung zusätzlich mit Asbestfasern angereichert worden. Nach und nach werden nun entsprechend Wehre, Schleusentore, aber auch Pontons und vor allem Schiffskörper überholt, weil sie neue Anstriche benötigen. Dazu ist es dann erforderlich, zunächst die alte Farbbeschichtung zu entfernen, was aber wirtschaftlich und auch technisch nur mit erheblichem Aufwand möglich ist. Aufgrund der im Steinkohlenteerpech enthaltenen Asbestfasern müsste diese Beschichtung eigentlich ohne deren Zerkleinerung entfernt und dann der Entsorgung zugeführt werden. Bisher im Einsatz sind Verfahren, bei denen die entsprechende Beschichtung nach Trockenlegung des entsprechenden Sektors des Wehrs oder der sonst zu reinigenden Flächen per Sandstrahl gelöst und dann entsorgt wird. Bekannt ist auch ein Verfahren (US-PS 4 897 121), bei dem neben einem mechanischen Abtragen auch Hochdruckwasser eingesetzt wird. US-A-5 016 314 offenbart ein Verfahren zur Entfernung von stark gesundheits-und/oder umwelt gefährdenden Asbestfasern enthaltenden Beschichtungen, Steinkohlenteerpech-, polycyclische Kohlenwasserstoffe oder polychlorierte Biphenyl-Beschichtungen von Bauwerken bei dem der zu bearbeitende Sektor des Bauwerkes eingehaust wird, von der gefährdenden Beschichtung mit Hilfe von Hochdruckwasserstrahlen befreit wird, die Beschichtung bei gleichzeitiger Zerkleinerung abgehoben und gesammelt und der beim Aufbringen der Hochdruckwasserstrahlen entstehende Wasserdampf abgesaugt und niedergeschlagen un dann entsorgt wird. US-A-5 016 314 offenbart weiter eine Anlage zur Entfernung von Asbestfasern enthaltenden und selbst stark gesundheits-und umweltgefährdenden Beschichtungen, Steinkohlenteerpech-, polycyclishe Kohlenwasserstoffe oder polychlorierte Biphenyl-Beschichtungen von Bauwerken, bestehend aus einer den zu bearbeitenden Sektor des Bauwerks freilegenden Außenanlage, einer die Beschichtung von der Oberfläche des Bauwerks ablösenden Strahleinrichtung in Form einer einem Hochdruckwasserstrahl erzeugenden Strahlpistole sowie eine Aufbereitung für das Strahlmittel und einen Tröpfchen abscheider für den entstehenden Wasserdampf, wobei die Strahleinrichtung in einer Einhausung angeordnet ist, in der zusätzlich ein Strahlkessel und Strahlpistole als Teile der Anlage untergebracht sind und wobei die Einhausung luft - und abwassermäßig mit der Aufbereitung verbunden ist. Um die Umwelt und vor allem aber die mit diesen Arbeiten beschäftigten Mitarbeiter zu schützen, können diese nur in gesonderten Schutzanzügen arbeiten und darüber hinaus in einer weitgehend abgekapselten Umgebung. Problematisch bleibt aber, dass durch das Bestrahlen mit Sand bzw. anderen Materialien das Steinkohlenteerpech soweit zerkleinert wird, dass es zusammen mit dem Strahlgut nur unter besonderen Vorsichtsmaßnahmen ausgeschleust und dann mit viel Aufwand entsorgt werden kann. Die Zerkleinerung ist so weitgehend, dass einzelne Fasern bzw. Asbestfasern gefährdend freigelegt sind, wobei sie auch noch eine Größenordnung aufweisen, die die Behandlung und Sicherung erheblich erschwert. Nachteilig ist darüber hinaus, dass die Schutzanzüge der im abgekapselten Bereich Arbeitenden durch die zurückfliegenden Strahlmittelpartikel aber auch die gelösten Partikel gefährdet sind, was vor allem für die für die Sicht notwendigen Sichtschutzflächen gilt. Schon nach relativ kurzer Zeit wird diese aus Spezialglas bestehende Fläche blind, sodass die Mitarbeiter entweder nicht mehr richtig sehen können und daher ausgeschleust werden müssen, um den gesamten Anzug zu wechseln bzw. die entsprechende Sichtscheibe.

Der Erfindung liegt daher die Aufgabe zugrunde, ein Verfahren und eine Anlage zu schaffen, mit denen schadstoffhaltige und die Umwelt gefährdende Beschichtungen unter ergonomisch und wirtschaftlich vertretbaren Umständen von im Wasser liegenden Teilen eines Wasserbauwerkes entfernt und sicher entsorgt werden können.

Die Aufgabe wird verfahrensmäßig durch die Merkmale des Anspruches 1 und anlagemäßig durch die Merkmale des Anspruchs 9 gelöst gelöst.

Durch die Bearbeitung und das Lösen der Beschichtung durch Hochdruckwasserstrahlen wird zunächst einmal verhindert, dass die stark gefährdenden Fasern, z. B. Asbestfasern freigesetzt werden bzw. sonstwie in die Umgebung gelangen. Sie sind im Abwasser eingebunden zusammen mit den Resten der Beschichtung, wobei es je nach Zusammensetzung auch denkbar ist, dass nicht normal temperiertes Wasser für die Hochdruckwasserstrahlen benutzt wird, sondern vielmehr temperiertes oder gar heißes Wasser. Die Wärme des Wassers ist auch deshalb für die weitere Verfahrensführung unproblematisch, weil der sowieso und insbesondere natürlich bei heißem Wasser entstehende Wasserdampf direkt in der Einhausung abgesaugt und niedergeschlagen wird, sodass es dann auch möglich ist, die damit aus der Einhausung abgezogene Luft mit normalen, hoch empfindlichen und hoch wirksamen Papierfilter o. Ä. zu entstauben. Das Abwasser selbst, das ja einen relativ hohen Anteil an Schadstoffen enthält, wird abgepumpt und dann entsprechend so aufbereitet, dass das Wasser entweder in den Vorfluter abgegeben oder aber erneut eingesetzt werden kann. Die von der gefährdenden Beschichtung befreite Oberfläche kann ohne Schaden aufgrund des Trocknungsprozesses wieder Rost oder auch Staub ansetzen, weil nach dem Abtrocknen der Oberfläche eine Sandstrahlung erfolgt, die eine für den nachfolgenden Anstrich optimale Oberfläche herstellt, sodass dann die neue Beschichtung jeweils aufgebracht werden kann. Das Verfahren hat hier deshalb besondere Vorteile, weil es aufgrund der großflächigen und damit zugleich sicheren Einhausung die Möglichkeit gibt, große Flächen in einem Arbeitsgang zu bearbeiten, weil sofort anschließend an die Entfernung der Beschichtung und die Trocknung eine Sandstrahlung vorgenommen wird. Damit wird auch der feinste Hauch an Rost entfernt und eine absolut blanke Stahl- oder sonstigen Oberfläche hergestellt, sodass die nachfolgende Beschichtung unter optimalen Verhältnissen aufgebracht werden kann. Denkbar ist es natürlich auch, nach dem Entfernen der Beschichtung durch Hochdruckwasserstrahlen jeweils kleine Abschnitte schnell zu trocknen und dann mit der neuen Beschichtung zu versehen, doch ist dieser Arbeitsvorgang aufwendiger und insbesondere auch bezüglich der Entsorgung schwieriger, weil natürlich beim Bestrahlen mit Hochdruckwasser Feinpartikel irgendwo sich leicht festsetzen können, die eigentlich zweckmäßigerweise nach Beendigung des Hochdruckwasserstrahlens mitentfernt werden sollten.

Nach einer zweckmäßigen Ausführung des Verfahrens ist vorgesehen, dass ein zu bearbeitendes Wasserbauwerk Wehr für Wehr eingehaust und per Hochdruckwasserstrahl bearbeitet wird. Bei einem Wasserbauwerk, insbesondere einem Wehr lässt sich das erfindungsgemäße Verfahren besonders vorteilhaft einsetzen. Gemeint ist hier, dass in diesem Fall praktisch Wehr für Wehr bzw. Sektor für Sektor bearbeitet wird, wenn man davon ausgeht, dass eine Staustufe beispielsweise zwei, drei oder mehr Wehre (Sektoren) aufweist. Die Wehre haben eine relativ große Fläche, wobei das beschriebene erfindungsgemäße Verfahren eine Lösung bietet, diese großen Sektoren in einem Arbeitsgang zu bearbeiten. Denkbar ist es aber auch, beispielsweise Schiffanlegepontons nach dem Verbringen in eine Halle oder in eine entsprechende Einhausung in einem Arbeitsgang per Hochdruckwasserstrahl zu säubern und dann anschließend weiter zu behandeln.

Das für das Lösen der Beschichtung notwendige Hochdruckwasser wird gemäß der Erfindung erzeugt, indem das Reinigungswasser auf 2 500 bis 3 500 bar vorgespannt und dann als jeweils ein einen Wasserausstoß von 6 - 10 l/Min. aufweisender Hochdruckwasserstrahl auf die Oberfläche des Wasserbauwerkes aufgebracht wird. Das hochgespannte Druckwasser sorgt dafür, dass die Beschichtung des Bauwerkes schnell und gleichmäßig zerkleinert und vom Untergrund abgelöst wird. Dadurch, dass mit reduzierter Wassermenge gefahren wird, wird ein allzugroßer Rückprall des Wassers vermieden. Vielmehr werden die einzelnen Wassertropfen zwar konzentriert auf die Oberfläche des zu reinigenden Wasserbauwerkes aufgebracht, allerdings so, dass sie aufgrund der relativ geringen Wassermenge nicht all zu weit zurückprallen, sondern vielmehr abfließen unter Mitnahme der zerkleinerten Beschichtung. Die Reduzierung der Wassermenge wird durch eine bestimmte Ausbildung der zum Einsatz kommenden Reinigungswerkzeuge erreicht. Einzelheiten hierzu werden weiter hinten erläutert.

Bei der Bearbeitung mit dem Hochdruckwasserstrahl wird nicht nur eine reduzierte Menge an Wassertropfen zurückgeworfen, sondern mit ihnen oder auch getrennt von ihnen Feinpartikel, die sich dann leicht im Bereich der Einhausung irgendwo noch niederschlagen. Um hier eine Beeinträchtigung oder gar Gefährdung des Personals zu vermeiden und um auch später beim Abbau der Einhausung eine Mitnahme der Feinpartikel durch das Wasser zu vermeiden, ist vorgesehen, dass der von der Beschichtung befreite Abschnitt des Wasserbauwerkes zunächst von Feinpartikeln gereinigt, dann getrocknet, sandgestrahlt und mit Polyurethan beschichtet wird. Der entsprechend vollständig gereinigte Raum kann problemlos sandgestrahlt und zwar auch abschnittsweise sandgestrahlt werden, weil diese Strahlpraxis keine Gefährdung für die Umwelt mehr darstellt. Vielmehr könnte rein theoretisch das Strahlmittel mit den noch abgelösten Rost- oder Stahlbestandteilen einfach auf dem Boden der Einhausung verbleiben und später vom Wasser mitgenommen werden. Gefährdungen können nicht mehr auftreten. Dennoch wird man sicherlich auch diese Reste rechtzeitig absaugen und entsorgen. Vorteilhaft ist aber, dass nun so gearbeitet werden kann, d. h. sandgestrahlt werden kann, dass dann sofort Polyurethan also die neue oder vorläufige Beschichtung aufzubringen ist.

Eine reduzierte Wassermenge gemäß der obigen Ausführungen erreicht man insbesondere dann, wenn der Hochdruckwasserstrahl auf einen Wasserausstoß von 8 l/Min. eingestellt wird. Diese niedrige Wassermenge hat wie schon erwähnt den Vorteil, dass der Rückprall geringer ist. Darüber hinaus hat es aber auch den Vorteil, dass bei der nachfolgenden Aufbereitung einfach geringere Mengen aufbereitet werden müssen, sodass auch der Aufbereitungsprozess dadurch entlastet ist.

Zur Optimierung der Zerkleinerungsarbeit auf der Wehroberfläche ist vorgesehen, dass der Hochdruckwasserstrahl pulsierend aufgebracht wird. Der pulsierende Ausstoß führt zu einer optimierten Zerkleinerung und Ablösen der Beschichtung von der Oberfläche des Bauwerkes. In kurzer Zeit kann eine relativ große Fläche gereinigt und gleichzeitig dabei so vorbereitet werden, dass se anschließend mit wenig Aufwand weiter zu bearbeiten ist und zwar mit einem Material, das die Umwelt nicht beeinträchtigt.

Aufgrund der Arbeiten quasi unterhalb der Wasseroberfläche bei Wasserbauwerken und sonstiger Arbeitsbestimmungen darf in den Arbeitsbereich der Einhausung nur niedrig gespannter Strom eingeleitet werden. Um hier die Ausbeute der Beleuchtung zu optimieren und damit die ergonomischen Verhältnisse in der Einhausung gezielt zu verbessern, ist vorgesehen, dass die Einhausung und der zu bearbeitende Sektor mit einer hellen, vorzugsweise einem weißen Farbanstrich oder einem entsprechenden Behang versehen wird. Auch bei wenig Beleuchtung wird hierdurch eine vorteilhafte Ausleuchtung gewährleistet, sodass die Mitarbeiter unter optimalen Bedingungen arbeiten können, wobei die Bearbeitung mit dem Wasserstrahl gegenüber dem bekannten Sandstrahl vor allem auch den Vorteil hat, dass der Schutzanzug der Mitarbeiter durch das mit Schadstoffen behaftete Wasser nicht beeinträchtigt wird. Bei der Sandstrahlung ist es nicht zu vermeiden, dass schon nach relativ kurzer Zeit insbesondere das Sichtfenster im Anzug so beschlagen, d. h. aufgerauht ist, dass die Mitarbeiter keinen einwandfreien Durchblick mehr haben. Bei der Bearbeitung mit Hochdruckwasserstrahl dagegen ist eine solche Beeinträchtigung nicht zu befürchten und nicht vorhanden. Darüber hinaus wird ja der Wasserdampf sofort abgesaugt und niedergeschlagen, sodass für die Mitarbeiter eine immer einwandfreie Sicht gegeben ist. Würde man den Wasserdampf nicht absaugen, wären die Arbeitsverhältnisse wesentlich schlechter und insbesondere die ja für die Sicherheit der Leute auch wichtige Sicht.

Die Aufbereitung des Abwassers läuft so, dass das die abgelösten Beschichtungsteile nach dem Trennen vom Abwasser verbrannt werden. In den abgelösten Beschichtungsteilen befinden sich ja auch Asbestfasern, wobei diese sogar auch teilweise frei in dem Abwasser mitgeführt werden. Diese und die Bestandteile des Steinkohlenteerpechs können vorteilhaft in einer Filterpresse vom Wasser befreit bzw. getrennt werden, sodass sie dann als Feststoffkuchen einer Verbrennung, vorzugsweise einer gezielten Verbrennung zugeführt werden. Werden nämlich besonders hohe Temperaturen erreicht, so werden die Asbestfasern neutralisiert, sodass sie für die Umwelt keine Gefährdung mehr darstellen.

Zur Durchführung des Verfahrens dient eine Anlage zur Entfernung von Asbestfasern enthaltenden und selbst stark gesundheits- und umweltgefährdenden Beschichtungen von Wasserbauwerken, bestehend aus einer den zu bearbeitenden Sektor eines Wehres freilegenden Außenanlage, einer die Beschichtung von der Oberfläche des Wehres ablösenden Strahleinrichtung in Form einer einen Hochdruckwasserstrahl erzeugenden Strahlpistole sowie einer Aufbereitung für das Strahlmittel, wobei gemäß der Erfindung vorgesehen ist, dass die Strahleinrichtung in einer mit einer Schleuse für die Arbeiter und einer Trocknungsanlage ausgerüsteten, dem Wehr zugeordneten Einhausung angeordnet ist, in der zusätzlich eine Sandstrahleinrichtung mit Kompressor, ein Strahlkessel und Strahlpistole als Teile der Anlage untergebracht sind und dass die Einhausung luft- und abwassermäßig mit der Aufbereitung verbunden ist und einen Tröpfchenabscheider für den entstehenden Wasserdampf aufweist.

Während der Stand der Technik lediglich eine Strahleinrichtung in Form einer Sandstrahleinrichtung oder eine kombinierte mechanische und Wasserstrahlzerkleinerung kennt, die mit den weiter vorne beschriebenen Nachteilen und zwar erheblichen Nachteilen behaftet ist, sieht die Erfindung vor, dass hier die Strahleinrichtung als einen Hochdruckwasserstrahl erzeugende Strahlpistole ausgebildet ist, die großflächig arbeiten kann und die die gefährdenden Asbestfasern beim Lösen der sowieso gefährdenden Beschichtung gleich in Wasser einbindet, sodass sie nicht in die Umgebungsluft gelangen können, sondern dies großflächig ermöglicht verbunden mit erheblichen Sicherheitsvorteilen. Aber selbst die evtl. noch kleinsten Partikel, die mit den Wassertropfen in der Einhausung umherschwirren, werden durch den Tröpfchenabscheider eingefangen und dann mit der weitgehend trocknen Luft in einen Filter gebracht, wo sie absolut sicher niedergeschlagen werden. Andere Bestandteile werden mit den Wassertröpfchen weitergeleitet, um dann in der Aufbereitung mit dem übrigen Abwasser entsorgt zu werden. Damit ist eine umfassende Anlage geschaffen, die dafür sorgt, dass die in diesem Bereich beschäftigten Mitarbeiter unter vernünftigen ergonomischen Bedingungen arbeiten und ein insgesamt auch wirtschaftliches Verfahren ausführen. Besonders vorteilhaft ist, dass unter den gegebenen engen Verhältnissen so gearbeitet werden kann, dass die gefährdende Beschichtung sicher gelöst und auch sicher aufbereitet und entsorgt werden kann.

Eine besonders wirtschaftliche Ausbildung der Anlage ist die, bei der die Einhausung jeweils einen Sektor eines Wasserbauwerkes, also ein Wehr einfassend ausgebildet und einer den Sektor überspannenden Stützkonstruktion zugeordnet ist. Hierdurch ist erreicht, dass jeweils sehr große Flächen in einem Arbeitsgang bearbeitet werden können und zwar bezüglich des aufwendigen Arbeitsganges nämlich des Ablösens der schädlichen Beschichtung, um dann in weiteren Arbeitsgängen sandgestrahlt und mit der neuen Beschichtung versehen zu werden. All dies ist möglich, weil eine große Einhausung möglich wird, einen ganzen Bauwerksabschnitt umfasst, wobei solche Abschnitte aus zwei, drei oder mehr Teilabschnitten bestehen. Bei einem Wehr überspannt die große Stützkonstruktion praktisch den Bereich zwischen zwei Pfeilern und ermöglicht so die Anbringung einer großen und sicheren Einhausung.

Es wird vorgesehen dass dem Tröpfchenabscheider ein zur Aufbereitung gehörender Lüfter mit Kraftstoff-Filter parallel- oder nachgeschaltet ist. Hier werden auch feinste Partikel der Asbestfasern zurückgehalten, sodass die den Kraftstoff-Filter verlassende Abluft problemlos in die Umgebung abgegeben werden kann. Dieser Tröpfchenabscheider und der zugeordnete Lüfter dienen damit gleichzeitig auch einer gleichmäßigen Belüftung des Arbeitsraumes in der Einhausung, weil dafür gesorgt ist, dass aufgrund des entstehenden Unterdrucks in der Einhausung Luft von oben her nachströmt oder nachgeführt werden kann.

Nach einer Ausführung des Verfahrens weist die Strahlpistole Düsen auf, die kontinuierlich gedreht werden, sodass ein bestimmter Wasserstrahl und zwar ein Wasserstrahl entsteht, der einen Rückprall weitgehend vermeidet. Hierzu ist weiter vorgesehen, dass die Strahlpistole Düsen aufweist, die über den Wasserdruck, oder über einen Hydraulikmotor drehbar ausgebildet sind. Werden die Düsen über einen Hydraulikmotor gedreht, bleibt der vorhandene Wasserdruck für die Strahlarbeit zur Verfügung, sodass eine bessere Ablösearbeit gesichert ist, auch bei sich drehenden Düsen.

Zur Erhöhung der Strahleistung wird vorgeschlagen, dass die Stahlpistole mit einem Anschluss für die Zugabe von Strahlmittel ausgerüstet ist. Damit kann die Stärke des Strahls variiert werden, indem ein festes oder ein flüssiges Strahlmittel beigemengt wird.

Zur Verbesserung der ergonomischen Verhältnisse in der Einhausung ist vorgesehen, dass die Einhausung einen helltonigen Behang aufweist, wobei es sich hier in der einfachsten Ausführung um einen weißen Anstrich handelt.

Die in der Einhausung eingesetzten Mitarbeiter arbeiten in einem vollklimatisierten und belüfteten Arbeitsanzug. Ihr Arbeitsfeld ist damit begrenzt, gleichzeitig auch ihre Beweglichkeit. Sie gelangen in die Einhausung durch eine Schleuse, wobei die Schleuse als Doppelschleuse ausgebildet ist. Dies ermöglicht es, dass beide in der Einhausung eingesetzten Mitarbeiter gleichzeitig die Einhausung verlassen und sich in der Doppelschleuse gegenseitig helfen, die Verbindung zur Belüftung zu lösen, den Anzug zu öffnen usw. Sie können dann in der nachfolgenden Dusche den Anzug abreinigen und schließlich dann auch ablegen.

Das erfindungsgemäße Verfahren zeichnet sich dadurch aus, dass nach dem Ablösen der Beschichtung über den Hochdruckwasserstrahl eine optimal für die nachfolgende Beschichtung benötigte Oberfläche des Wehrs zur Verfügung gestellt wird, was dadurch noch verbessert wird, dass der Einhausung eine Entstaubungsanlage für Einfachstaub zugeordnet ist.

Da über die Bearbeitung mit Hochdruckwasserstrahl derartig gefährdende Beschichtungen bereits abgehoben und entsorgt ist, kann nun bei dem nachfolgenden Sandstrahlen mit einfachsten Gegebenheiten gerechnet werden. Dementsprechend wird auch mit diesem Sandstrahlen kein gefährlicher Staub mehr erzeugt, sondern vielmehr ganz üblicher, lediglich noch Rost- und Stahlpartikel enthaltener Absand, sodass dieser auch entsprechend als Einfachstaub entfernt werden kann. Dafür dienen normale Entstaubungsanlagen und auch der anfallende Staub bzw. der Strahlrest kann problemlos entsorgt werden.

Eine gezielte Befreiung der mit Wasser geschwängerten Luft erreicht man dadurch, dass der Tröpfchenabscheider waagerecht zum Medienstrom angeordnete Drahtgestrickpakete aufweist. Das Wasser läuft an den Drahtgetrickpaketen abwärts und wird dann abgeführt, um wie beschrieben in der Aufbereitung von evtl. noch mitgeführten Beschichtungsbestandteilen befreit zu werden.

Die Erfindung zeichnet sich dadurch aus, dass ein Verfahren und eine Anlage zur Verfügung gestellt werden, die eine Entfernung von hoch gefährdenden Beschichtungen auf sämtlichen Stahl- und Betonbauwerken, z. B. an Wehren, an sonstigen Abschlusswänden und an Schiffswänden ermöglichen, ohne die damit beauftragten Mitarbeiter und ohne die Umwelt zu gefährden. Vorteilhaft ist dabei insbesondere, dass im Arbeitsbereich Verhältnisse zur Verfügung gestellt werden, die soweit ergonomisch gestaltet werden können, dass die Mitarbeiter hier auch mit den vorgeschriebenen Schutzanzügen arbeiten können. Die Hochdruckwasserstrahlen lösen die vorhandene Beschichtung vom Wehr oder sonstigen zu reinigenden Teilen ab und stellen eine Oberfläche zur Verfügung, die gemäß der Erfindung nach einem Trocknungsvorgang und einem nachfolgenden Sandstrahl-Vorgang mit der neuen Beschichtung versehen wird. Dabei ist es vorteilhaft, dass mit Hilfe dieses Verfahrens zunächst einmal sehr große Flächen von der gefährdenden Beschichtung befreit werden, die dann insgesamt aus dem Arbeitsbereich entfernt wird, sodass in den weitgehend sauberen Arbeitsbereich dann die Sandstrahlungsarbeiten vorgenommen werden können, um die frische Oberfläche sofort zu beschichten. Die im Einsatz befindlichen Mitarbeiter werden durch die Wasserstrahlen und die Asbestfasern nicht beeinträchtigt, weil das mit geringer Wassermenge ausströmende Wasser zwar die Beschichtung löst und abführt, aber nur einen geringen Rückprall hat und die Mitarbeiter nicht beeinträchtigt, insbesondere nicht deren Schutzanszüge und die Sichtgläser. Entstehender Wasserdampf wird sofort abgesaugt und niedergeschlagen, sodass immer eine einwandfreie Sicht und damit gute Arbeitsverhältnisse vorhanden sind.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine perspektivische Wiedergabe eines entsprechenden Arbeitsplatzes an einer Stauwerksanlage,
- Fig. 2: einen Schnitt durch eine Stauwerksanlage in vereinfachter Darstellung,
- Fig. 3: eine Spritzpistole für Hochdruckwasserstrahlen in perspektivischer Darstellung,
- Fig. 4: einen Tröpfchenabscheider in vereinfachter Darstellung und
- Fig. 5: ein Organisationsschema.

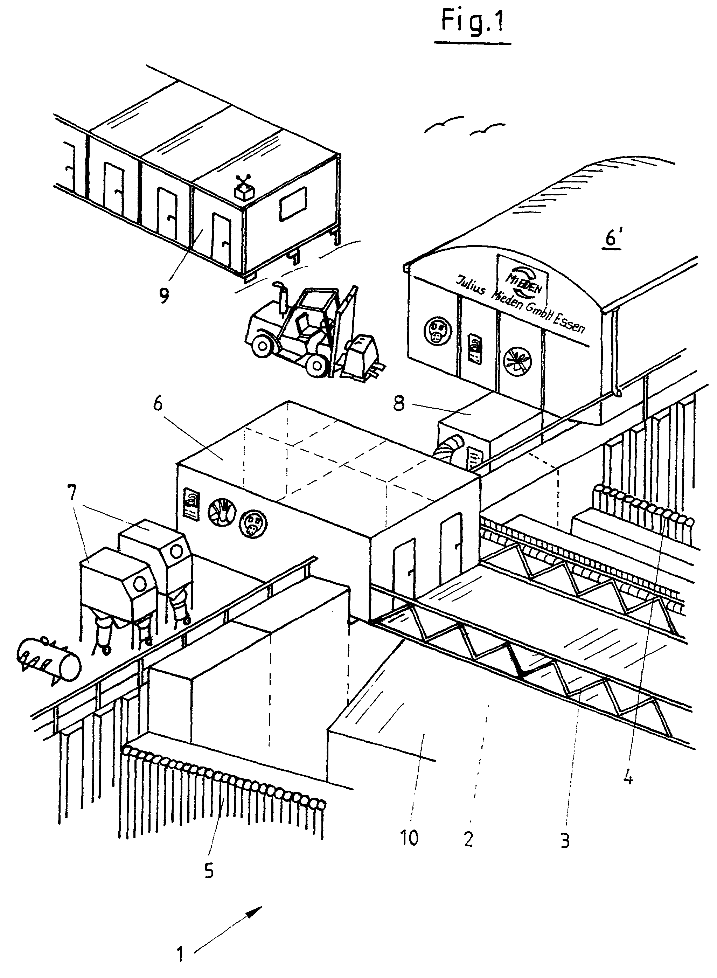

Eine Stauwerksanlage 1 als Beispiel für ein zu sanierendes Wasserbauwerk ist in vereinfachter Darstellung in Figur 1 wiedergegeben. Erkennbar ist hier das für den Rückstau des Wassers vorgesehene Wehr 2, wobei über einen Sektor dieses Wehres 2 eine Stützkonstruktion 3 eingebracht ist, die das Anbringen einer durchgehenden Einhausung 10 ermöglicht, Oberhalb und unterhalb der Stützkonstruktion 3 bzw. des Wehres 2 ist eine Außenanlage 4, 5 in Form von Wasserdämmen vorgesehen, die den Bereich dazwischen trockenlegen, sodass man an das eigentliche Wehr 2 bzw. den entsprechenden Sektor herankommen kann.

In gewisser Hinsicht Übertage sind eine Werkshalle 6, 6', ein oder mehrere Strahlsandsilo 7, eine Lüftungsanlage 8 und ein entsprechend großer Bürocontainer 9 vorgesehen.

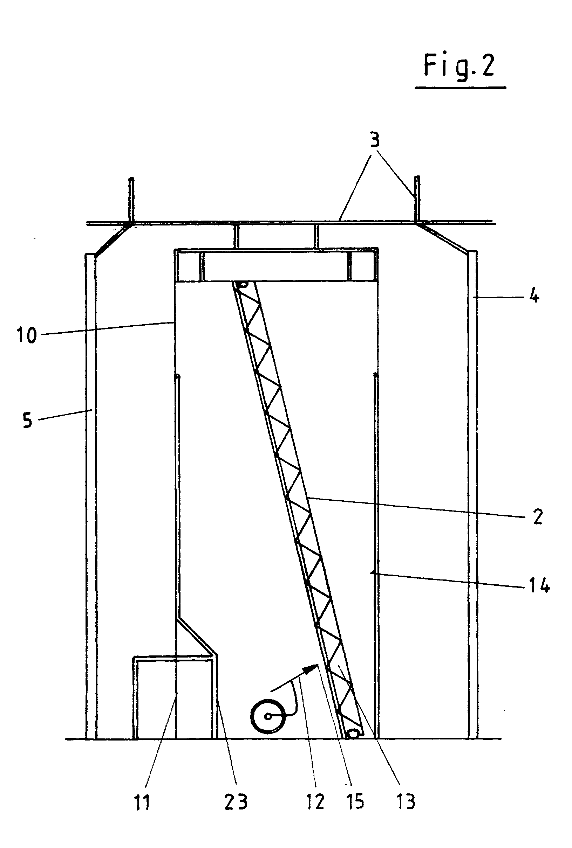

Der Arbeitsbereich beim Lösen der Beschichtung des Wehres 2 wird aus Figur 2 deutlich, wobei hier die beiden Außenanlagen 4, 5 angedeutet sind, die für das Trokkenlegen des Bereiches um das Wehr 2 herum Sorge tragen. Dieses Wehr 2 bzw. der entsprechende Sektor 13 ist nur vereinfacht wiedergegeben. Nur angedeutet ist, dass es so verschwenkt bzw. angehoben werden kann, dass es im Einsatzfall Wasser zurückhalten oder aufstauen kann.

Die Einhausung ist mit 10 bezeichnet und sichert den gesamten Bereich um beide Seiten des Sektors 13, wobei dieser Bereich über eine Schleuse 11 in Form einer Doppelschleuse begangen werden kann. Im eigentlichen Arbeitsbereich ist eine Strahleinrichtung 12 in Form einer Strahlpistole 15 vorgesehen, mit der Hochdruckwasserstrahlen auf die Oberfläche des Sektors 13 geschossen werden. Mit 23 ist eine hier nur angedeutete Trocknungsanlage bezeichnet, mit der nach dem Ablösen der Beschichtung vom Sektor 13 dieses anschließend getrocknet werden kann, um dann weiter bearbeitet zu werden.

Die gesamte Innenfläche der Einhausung 10 oder nur ein Teil ist mit einem hellgrundigen, vorzugsweise weißen Behang 14 versehen, um so die ergonomischen Verhältnisse in diesem Bereich zu optimieren. Nicht dargestellt sind Beleuchtungen, mit denen der Raum innerhalb der Einhausung 10 so beleuchtet werden kann, dass die ebenfalls nicht dargestellten Mitarbeiter sicher arbeiten können.

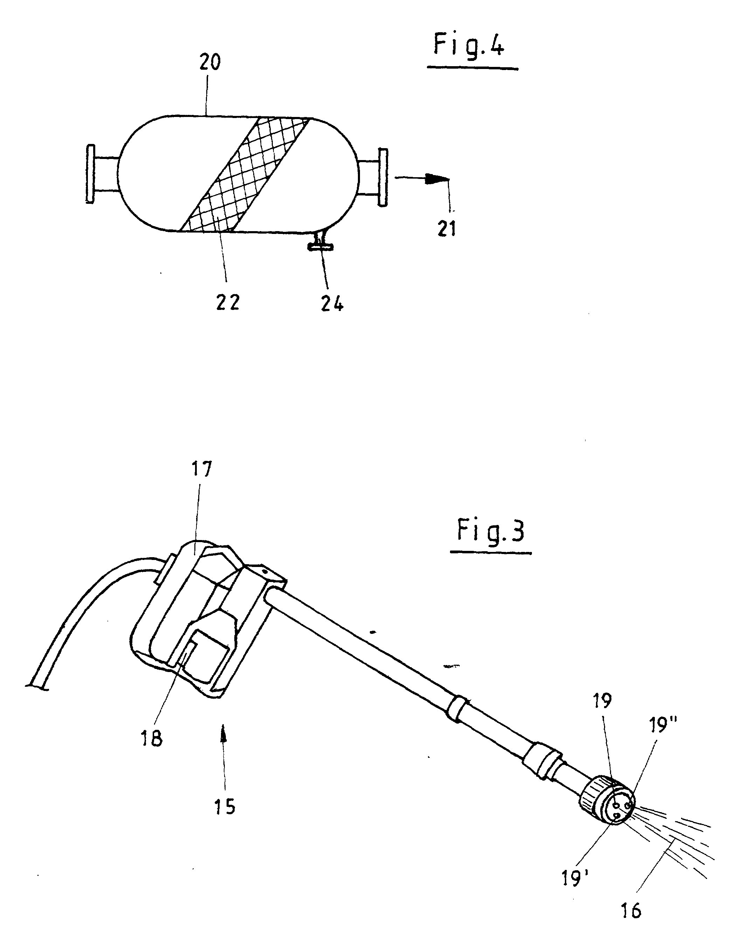

Figur 3 zeigt eine lediglich weitgehend schematisiert wiedergegebene Strahlpistole 15, die Hochdruckwasserstrahlen 16 ausstößt. Die Strahlpistole 15 verfügt über ein Stützteil 17, sodass der Mitarbeiter sie sicher im Griff hat, wenn er über den Betätigungshebel 18 den Wasserzufluss freigibt, sodass aus den Düsen 19, 19', 19'' entsprechend hochgespanntes Wasser austreten kann. Die Düse 19 wird gedreht, vorzugsweise über einen gesonderten Antrieb, sodass eine Art Wasserschleier entsteht, der gleichzeitig auch die Möglichkeit gibt, die Düse 19 relativ dicht bis an die Oberfläche des Sektors 13 heranzuführen, ohne dass ein all zu großer Rückprall entsteht.

Aufgrund des Aufsprühens des hochgespannten Wassers auf die Oberfläche des Sektors 13 entsteht ein Wassernebel, der die Arbeitsbedingungen innerhalb der Einhausung 10 stark beeinträchtigen würde, wenn nicht ein gesonderter Tröpfchenabscheider 20 vorgesehen wäre. Durch diesen wird die mit Wassertröpfchen angereicherte Luft hindurchgezogen, wobei sich die Tröpfchen an den Drahtgestrickpaketen 22 absetzen, dann herablaufen und über den Wasserablauf 24 als Wasserstrahl abgeführt werden können. Die noch Staubpartikel bzw. Beschichtungsbestandteile aufweisende Luft wird in Richtung Aufbereitung 21 geführt, wobei diese zunächst in Form eines Luftfilters wirksam wird, sodass die Luft dann problemlos in die Umwelt abgegeben werden kann. Der Tröpfchenabscheider 20 ist in Figur 4 schematisch wiedergegeben.

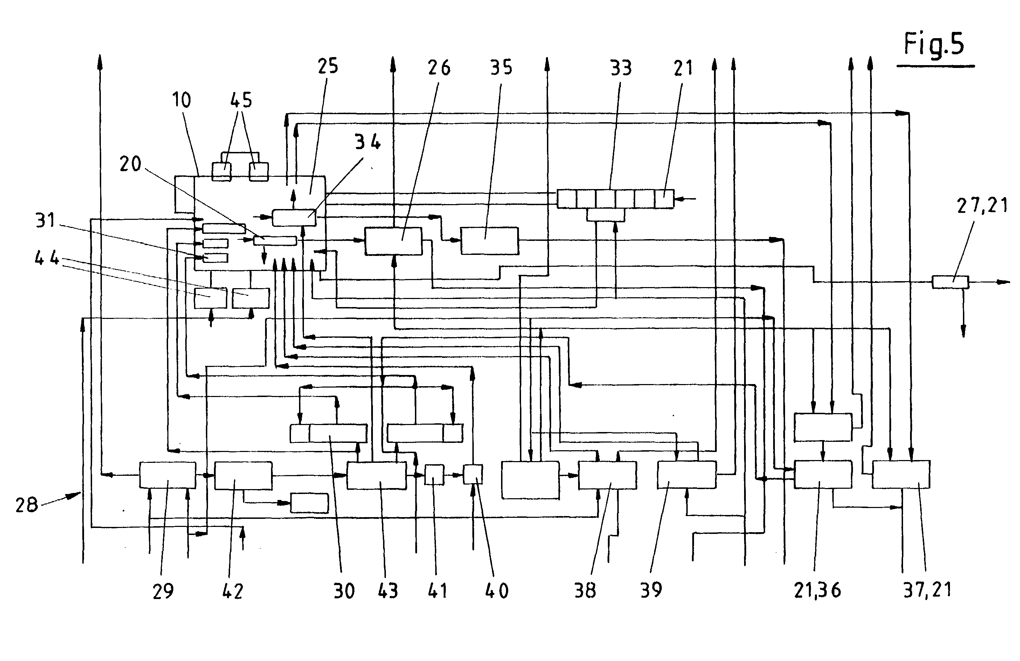

Figur 5 zeigt ein Fließbild bzw. ein Organisationsschema, wobei deutlich wird, dass beim erfindungsgemäßen Verfahren und auch bei der entsprechenden Anlage nicht nur der sogenannte Schwarzbereich, sondern auch der nachfolgende Aufbereitungsbereich eine wesentliche Bedeutung hat.

Mit 20 ist der Tröpfchenabscheider bezeichnet, der hier im schwarzen Bereich 25, d. h. also eigentlich in der Einhausung 10 angeordnet ist. Er steht mit dem Lüfter 26 in Verbindung, der dafür sorgt, dass kontinuierlich Luft aus dem schwarzen Bereich 25 abgesaugt und durch den Tröpfchenabscheider 20 hindurchgezogen wird. Es entsteht somit innerhalb des schwarzen Bereiches praktisch kaum ein die Arbeiten beeinträchtigender Wassernebel, weil kontinuierlich Luft abgesaugt und frische Luft nachgeführt wird. In dem Lüfter 26 ist ein Kraftstoff-Filter untergebracht, sodass hier auch die letzten Bestandteile ausgeschieden werden können, sodass die Luft dann problemlos abgegeben wird. Eventuell noch vorhandenes Abwasser kann ebenfalls abgeführt werden. Der Staub geht in Richtung Aufbereitung 21 oder wird direkt weiterverarbeitet bzw. entsorgt.

Aus dem schwarzen Bereich 25 abgeführtes Abwasser gelangt in eine Filterpresse 27, wo die festen Bestandteile von dem Abwasser getrennt werden, sodass das Abwasser dann gereinigt in den Vorfluter gelangen kann.

Mit 28 ist die Strahleinrichtung bezeichnet, die für die Sandstrahlung benötigt wird, die im Anschluss an den Trocknungsvorgang abläuft. Diese Strahleinrichtung 28 verfügt über einen Kompressor 29, einen Strahlkessel 30 und eine Strahlpistole 31, mit deren Hilfe die Oberfläche des Sektors 13 dann von wieder angesetztem Rost und Restteilen befreit wird.

Über das Wassermanagement 33 erfolgt einmal das Zuleiten des benötigten Hochdruckwassers und andererseits ein Ableiten, wobei über die Membranpumpe 34 und den Pufferbehälter 35 Strahlwasser ggf. auch im Kreislauf geführt werden kann.

Mit 36 ist das Strahlmittelrecycling bezeichnet und die zugehörige Entstaubungsanlage 37, sodass auch der für das Sandstrahlen benötigte Werkstoff wieder aufbereitet und ggf. erneut eingesetzt werden kann.

Über ein Klimagerät 38 und eine Atemluftanlage 40 wird dafür Sorge getragen, dass innerhalb der Einhausung 10 günstige und ergonomische Arbeitsbedingungen herrschen. Mit 41 ist ein Co-Filter bezeichnet, der dafür sorgt, dass für die Atemlauft auch absolut einwandfreie Luft zur Verfügung steht. 39 ist die Wasserhöchstdruckpumpe und 42 ein Luftkühler.

Der Druckluftsammelkessel 43 gehört mit zur Strahleinrichtung 28, während die Arbeitsleuchten 44 über eine Batterie versorgt werden. Ebenso wie die Notbeleuchtung ist hier eine 42-Volt-Beleuchtung vorgeschrieben. Mit 45 sind schließlich die Flutklappen bezeichnet.

## Patentansprüche

1. Verfahren zur Entfernung von stark gesundheits- und/oder umweltgefährdenden Asbestfasern enthaltenden Beschichtungen, Steinkohlenteerpech-, polycyclische Kohlenwasserstoffe oder polychlorierte Biphenyl-Beschichtungen von Wasserbauwerken bei dem der zu bearbeitende Sektor eines Wasserbauwerkes/Wehres freigelegt und dann unter Belassung einer Schleuse für die Arbeiter eingehaust wird, woraufhin der Sektor von der gefährdende Beschichtung mit Hilfe von Hochdruckwasserstrahlen befreit wird, dass anschließend die Oberfläche, des Sektors getrocknet und sandgestrahlt wird, dass die Beschichtung bei gleichzeitiger Zerkleinerung abgehoben und gesammelt und dass der beim Aufbringen der Hochdruckwasserstrahlen entstehende Wasserdampf abgesaugt und niedergeschlagen und dann entsorgt wird.

2. Verfahren nach Anspruch 1,
wobei ein zu bearbeitendes Wasserbauwerk Wehr für Wehr eingehaust und per Hochdruckwasserstrahl bearbeitet wird.

3. Verfahren nach einem der vorhergehenden Ansprüche,
wobei das Reinigungswasser auf 2 500 bis 3 500 bar vorgespannt und dann als jeweils ein einen Wasserausstoß von 6 - 10 l/Min, aufweisender Hochdruckwasserstrahl auf die Oberfläche des Bauwerkes aufgebracht wird.

4. Verfahren nach einem der vorhergehenden Ansprüche,
wobei der von der Beschichtung befreite Abschnitt des Wasserbauwerkes zunächst von Feinpartikeln gereinigt, dann getrocknet, sandgestrahlt und mit Polyurethan beschichtet wird.

5. Verfahren nach einem der vorhergehenden Ansprüche,
wobei der Hochdruckwasserstrahl auf einen Wasserausstoß von 8 l/Min. eingestellt wird.

6. Verfahren nach einem der vorhergehenden Ansprüche,
wobei der Hochdruckwasserstrahl pulsierend aufgebracht wird.

7. Verfahren nach einem der vorhergehenden Ansprüche,
wobei die Einhausung und der zu bearbeitende Sektor mit einer hellen, vorzugsweise einem weißen Farbanstrich oder einem entsprechenden Behang versehen wird.

8. Verfahren nach einem der vorhergehenden Ansprüche,
wobei die abgelösten Beschichtungsteile nach dem Trennen vom Abwasser verbrannt werden.

9. Anlage zur Entfernung von Asbestfasern enthaltenden und selbst stark gesundheits- und umweltgefährdenden Beschichtungen von Wasserbauwerken, bestehend aus einer den zu bearbeitenden Sektor eines Wehres freilegenden Außenanlage (4, 5), einer die Beschichtung von der Oberfläche des Wehres ablösenden Strahleinrichtung (12) in Form einer einen Hochdruckwasserstrahl (16) erzeugenden Strahlpistole (15) sowie einer Aufbereitung (21) für das Strahlmittel und damit zur Durchführung des Verfahrens nach Anspruch 1 und/oder den nachfolgenden Ansprüchen 2 bis 8,
wobei
dass die Strahleinrichtung (12) in einer mit einer Schleuse (11)für die Arbeiter und einer Trocknungsanlage (23) ausgerüsteten, dem Wehr zugeordneten Einhausung (10) angeordnet ist, in der zusätzlich eine Sandstrahleinrichtung (28) mit Kompressor (29), ein Strahlkessel (30) und Strahlpistole (31) als Teile der Anlage untergebracht sind und dass die Einhausung (10) luft- und abwassermäßig mit der Aufbereitung (21) verbunden ist und einen Tröpfchenabscheider (20) für den entstehenden Wasserdampf aufweist.

10. Anlage nach Anspruch 9,
wobei die Einhausung (10) jeweils einen Sektor (51) des Wasserbauwerkes einfassend ausgebildet und einer den Sektor überspannenden Stützkonstruktion (3) zugeordnet ist.

11. Anlage nach Anspruch 9,
wobei dem Tröpfchenabscheider (20) ein zur Aufbereitung (21) gehörender Lüfter (26) mit Kraftstoff-Filter parallel - oder nachgeordnet ist.

12. Anlage nach Anspruch 9,
wobei die Strahlpistole (15) Düsen (19) aufweist, die über den Wasserdruck oder über einen Hydraulikmotor drehbar ausgebildet sind.

13. Anlage nach Anspruch 9,
wobei die Strahlpistole (15) mit einem Anschluss für die Zugabe von Strahlmittel ausgerüstet ist.

14. Anlage nach Anspruch 9,
wobei die Einhausung (10) einen helltonigen Behang (14) aufweist.

15. Anlage nach Anspruch 9,
wobei die Schleuse (11) als Doppelschleuse ausgebildet ist.

16. Anlage nach Anspruch 9,
wobei der Einhausung (10) [zusätzlich ene Sandstrahleinrichtung (28) mit Kompressor (29), Strahlkessel (30) und Strahlpistole (31)] eine Entstaubungsanlage (37) für Einfachstaub zugeordnet ist.

17. Anlage nach Anspruch 9,
wobei der Tröpfchenabscheider (20) waagerecht zum Medienstrom angeordnete Drahtgestrickpakete (22) aufweist.

## Claims

1. Method for removing coatings containing asbestos fibres which are very hazardous to health and/or the environment, coal-tar pitch, polycyclic hydrocarbons or polyehlorinated biphenyl coatings from hydraulic structures in which the sector of a hydraulic structure/weir to be treated is exposed and then enclosed leaving a sluice for the workers, whereupon the sector is freed from the hazardous coating with the aid of high pressure water jets, in that exclusively the surface of the sector is dried and sandblasted, in that the coating is lifted off with simultaneous crushing and collected and in that the water vapour produced when the high pressure water jets are applied is extracted by suction and condensed and then disposed of.

2. Method according to claim 1, wherein the hydraulic structure to be treated is enclosed weir by weir and treated by high pressure water jet.

3. Method according to any one of the preceding claims, wherein the cleaning water is preloaded to 2,500 to 3,500 bar and is then applied as a respective high pressure water jet having a water output of 6 to 10 l/min onto the surface of the structure.

4. Method according to any one of the preceding claims, wherein the section of the hydraulic structure freed from the coating is initially cleaned of fine particles, then dried, sandblasted and coated with polyurethane.

5. Method according to any one of the preceding claims, wherein the high pressure water jet is adjusted to a water output of 8 l/min.

6. Method according to any one of the preceding claims, wherein the high pressure water jet is applied in a pulsating manner.

7. Method according to any one of the preceding claims, wherein the enclosure and the sector to be treated are provided with a light, preferably a white coat of paint or a corresponding hanging.

8. Method according to any one of the preceding claims, wherein the detached coating parts are burned after separation from the waste water.

9. Installation for removing coatings containing asbestos fibres and which are themselves very hazardous to health and the environment from hydraulic structures, consisting of an external installation (4, 5) exposing the sector of a weir to be treated, a jet device (12) detaching the coating from the surface of the weir, in the form of a jet pistol (15) generating a high pressure water jet (16), as well as a treatment facility (21) for the jet means and therefore for carrying out the method according to claim 1 and/or the following claims 2 to 8, wherein the jet device (12) is arranged in an enclosure (10) equipped with a sluice (11) for the workers and a drying installation (23), and associated with the weir, in which enclosure (10) a sandblasting device (28) with a compressor (29) a jet boiler (30) and jet pistol (31) are also housed as parts of the installation and in that the enclosure (10) is connected in terms of air and waste water to the treatment facility (21) and has a demister (20) for the water vapour being produced.

10. Installation according to claim 9, wherein the enclosure (10) is designed to enclose a respective sector (51) of the hydraulic structure and is associated with a support construction (3) spanning the sector.

11. Installation according to claim 9, wherein a fan (26) pertaining to the treatment facility (21) and with a fuel filter is arranged parallel to or downstream from the demister (20).

12. Installation according to claim 9, wherein the jet pistol (15) has nozzles (19) which are constructed so as to be rotatable by the water pressure or by a hydraulic motor.

13. Installation according to claim 9, wherein the jet pistol (15) is equipped with a connection for the addition of jet means.

14. Installation according to claim 9, wherein the enclosure (10) has a light-coloured hanging (14).

15. Installation according to claim 9, wherein the sluice (11) is designed as a double sluice.

16. Installation according to claim 9, wherein a dedusting installation (37) for simple dust is associated with the enclosure (10) [in addition, a sandblasting device (28) with compressor (29), jet boiler (30) and jet pistol (31)].

17. Installation according to claim 9, wherein the demister (20) has wire mesh packages (22) arranged horizontally with respect to the flow of media.

## Revendications

1. Procédé d'élimination de revêtements contenant des fibres d'amiante, de revêtements à base de goudron de houille, d'hydrocarbures polycycliques ou de revêtements biphénylpolychlorés d'ouvrages hydrauliques, constituant un risque important pour la santé et/ou l'environnement dans lequel le secteur à traiter d'un ouvrage hydraulique/barrage est dégagé, puis bâché en laissant un sas pour les travailleurs, après quoi le secteur est libéré du revêtement à risque à l'aide de jets d'eau sous haute pression, dans lequel seule la surface du secteur est séchée et sablée, le revêtement est enlevé et recueilli, en même temps qu'il est fragmenté, et la vapeur d'eau se formant à l'application des jets d'eau sous haute pression est aspirée et condensée, puis éliminée.

2. Procédé selon la revendication 1, dans lequel un ouvrage hydraulique à traiter est bâché, déversoir après déversoir, et traité au jet d'eau sous haute pression.

3. Procédé selon l'une des revendications précédentes, dans lequel l'eau de nettoyage est précontrainte de 2 500 à 3 500 bars, puis est appliquée, sous la forme d'un jet d'eau sous haute pression présentant un débit d'eau de 6 à 10 l/min, sur la surface de l'ouvrage.

4. Procédé selon l'une des revendications précédentes, dans lequel la partie de l'ouvrage hydraulique, libérée du revêtement, est d'abord nettoyée des fines particules, puis séchée, sablée et revêtue de polyuréthanne.

5. Procédé selon l'une des revendications précédentes, dans lequel le jet d'eau sous haute pression est réglé sur un débit d'eau de 8 l/min.

6. Procédé selon l'une des revendications précédentes, dans lequel le jet d'eau sous haute pression est appliqué de manière pulsée.

7. Procédé selon l'une des revendications précédentes, **caractérisé en ce que** le bâchage et le secteur à traiter sont pourvus d'une peinture claire, de préférence blanche ou d'une tenture correspondante.

8. Procédé selon l'une des revendications précédentes, dans lequel les parties détachées du revêtement sont brûlées après séparation des eaux usées.

9. Installation d'élimination de revêtements contenant des fibres d'amiante et constituant eux-mêmes un grand risque pour la santé et l'environnement, d'ouvrages hydrauliques, constituée d'une installation extérieure (4, 5) dégageant le secteur à traiter d'un déversoir, d'un dispositif à jet (12) détachant le revêtement de la surface du déversoir, sous la forme d'un pistolet à jet (15) produisant un jet d'eau sous haute pression (16), ainsi que d'une préparation (21) pour le produit à projeter et donc pour la mise en oeuvre du procédé selon la revendication 1 et/ou les revendications 2 à 8 suivantes, dans laquelle le dispositif à jet (12) est disposé dans un bâchage (10) associé au déversoir, équipé d'un sas (11) pour les travailleurs et d'une installation de séchage (23), dans lequel sont logés en outre un dispositif de sablage (28) avec compresseur (29), une cuve à jet (30) et pistolet à jet (31) en tant que parties de l'installation, et dans laquelle le bâchage (10) est relié, en ce qui concerne l'air et les eaux usées, à la préparation (21), et comporte un séparateur de gouttelettes (20) pour la vapeur d'eau qui se forme.

10. Installation selon la revendication 9, dans laquelle le bâchage (10) est réalisé en comprenant un secteur (51) respectif de l'ouvrage hydraulique et est associé à une construction de soutien (3) franchissant le secteur.

11. Installation selon la revendication 9, dans laquelle un ventilateur (26) avec filtre de carburant, faisant partie de la préparation (21), est monté en parallèle ou en aval du séparateur de gouttelettes (20).

12. Installation selon la revendication 9, dans laquelle le pistolet à jet (15) comporte des buses (19) qui sont réalisées tournantes sous l'effet de la pression de l'eau ou au moyen d'un moteur hydraulique.

13. Installation selon la revendication 9, dans laquelle le pistolet à jet (15) est équipé d'un raccord pour l'ajout du produit à projeter.

14. Installation selon la revendication 9, dans laquelle le bâchage (10) comporte une tenture (14) d'un ton clair.

15. Installation selon la revendication 9, dans laquelle le sas (11) est réalisé comme sas double.

16. Installation selon la revendication 9, dans laquelle au bâchage (10) est associée [en outre un dispositif de sablage 28 avec compresseur 29, cuve à jet 30 et piston à jet 31] une installation de dépoussiérage (37) pour poussière simple.

17. Installation selon la revendication 9, dans laquelle le séparateur de gouttelettes (20) comporte des paquets d'un tricot de fils métalliques (22) disposés horizontalement par rapport au courant des produits.
